(19) Europäisches Patentamt
European Patent Office
Office européen des brevets

(11) Numéro de publication : **0 095 794**
**B1**

# (12) FASCICULE DE BREVET EUROPÉEN

(45) Date de publication du fascicule du brevet : **18.09.85**

(51) Int. Cl.⁴ : **C 07 C 121/75**, C 07 C 127/26, C 07 C 119/08

(21) Numéro de dépôt : **83200591.2**

(22) Date de dépôt : **05.12.80**

(60) Numéro de publication de la demande initiale en application de l'article 76 CBE : **0030887**

(54) **Nouveaux esters de l'acide 2,2-diméthyl 3-formyl cyclopropane 1-carboxylique.**

(30) Priorité : **17.12.79 FR 7930843**

(43) Date de publication de la demande : **07.12.83 Bulletin 83/49**

(45) Mention de la délivrance du brevet : **18.09.85 Bulletin 85/38**

(84) Etats contractants désignés : **AT BE CH DE GB IT LI LU NL SE**

(56) Documents cités :
**EP-A- 0 005 882**
**FR-A- 2 211 454**

(73) Titulaire : **ROUSSEL-UCLAF**
**35, boulevard des Invalides**
**F-75007 Paris (FR)**

(72) Inventeur : **Martel, Jacques**
**15, rue Douvillez**
**F-93140-Bondy (FR)**
Inventeur : **Tessier, Jean**
**30, rue Jean Moulin**
**F-94300-Vincennes (FR)**
Inventeur : **Teche, André**
**15, rue Godot de Mauroy**
**F-75009-Paris (FR)**

(74) Mandataire : **Tonnellier, Marie-José**
**ROUSSEL-UCLAF 111, route de Noisy Boîte Postale no.9**
**F-93230 Romainville (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 095 794 B1

**Description**

La présente invention concerne de nouveaux esters dérivés d'acides 3-formyl cyclopropane-1-carboxyliques et leur préparation.

L'invention a pour objet à titre de produits chimiques nouveaux sous toutes leurs formes stéréoisomères, les produits dont les noms suivent : le 2,2-diméthyl 3-formyl cyclopropane-1-carboxylate de (cyclohexylamino) (cyclohexylimino) méthyle, le 2,2-diméthyl 3-formyl cyclopropane-1-carboxylate d'(isopropylamino) (isopropylimino) méthyle, le 2,2 diméthyl 3-formyl cyclopropane-1-carboxylate de (RS) α-cyano 3-phénoxybenzyle et le 2,2-diméthyl 3-formyl cyclopropane-1-carboxylate de (S) α-cyano 3-phénoxybenzyle.

Dans les produits définis ci-dessus la copule acide peut être de configuration cis ou trans, racémique ou optiquement active.

L'invention a également pour objet un procédé de préparation des composés définis ci-dessus, caractérisé en ce que l'on fait réagir un acide 2,2-diméthyl 3-formyl cyclopropane-1-carboxylique sous forme trans ($II_1$) ou sous forme de lactone cis d'un acide 2,2-diméthyl 3-dihydroxyméthyl cyclopropane-1-carboxylique ($II_2$)

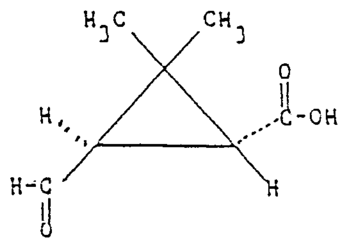

(trans) ($II_1$)

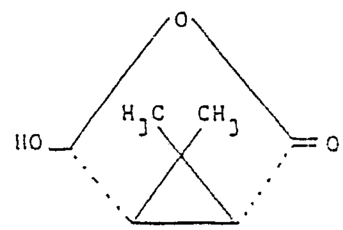

(cis) ($II_2$)

racémique ou optiquement actif, avec un réactif de déshydratation choisi dans le groupe constitué par le dicyclohexyl carbodiimide et le diisopropyl carbodiimide, en présence de pyridine ou de 4-diméthyl aminopyridine, et au sein d'un solvant organique non polaire, pour obtenir respectivement

i) le 2,2-diméthyl 3-formyl cyclopropane-1-carboxylate de (cyclohexylamino) (cyclohexylimino) méthyle

ii) ou le 2,2-diméthyl 3-formyl cyclopropane-1-carboxylate d'(isopropylamino) (isopropylimino) méthyle dont les copules acides sont de structure trans ou cis, racémiques ou optiquement actives, soumet si désiré l'un de ces composés à l'action de l'alcool (RS) α-cyano 3-phénoxybenzylique (III)

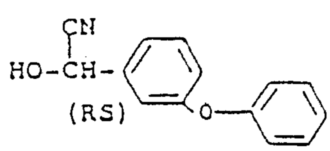

(III)

au sein d'un solvant non polaire pour obtenir

iii) le 2,2-diméthyl 3-formyl cyclopropane-1-carboxylate de (RS) α-cyano 3-phénoxybenzyle correspondant (IV)

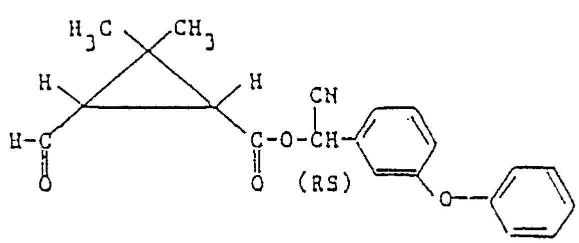

(IV)

de structure cis ou trans, racémique ou optiquement actif, soumet si désiré au sein d'un solvant organique non polaire, cet ester à l'action de l'aniline, pour obtenir le 2,2-diméthyl 3-(phényliminométhyl) cyclopropane-1-carboxylate de (RS) α-cyano 3-phénoxybenzyle, que l'on soumet à l'action de la triéthylamine au sein de l'isopropanol, au sein duquel l'ester d'alcool de configuration R est plus soluble que son diastéréoisomère, ce qui permet après épimérisation du carbone asymétrique de la copule alcoolique d'obtenir sous forme cristalline le 2,2-diméthyl 3-(phényliminométhyl) cyclopropane-1-carboxylate de (S) α-cyano 3-phénoxybenzyle que l'on soumet à une hydrolyse à l'aide d'un agent acide, pour obtenir

iiii) le 2,3-diméthyl 3-formyl cyclopropane-1-carboxylate de (S) α-cyano 3-phénoxybenzyle

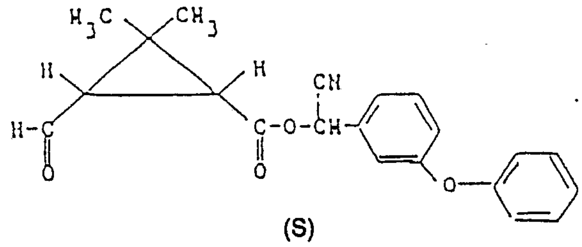

(S)

(VI$_A$)

Dans le procédé de l'invention :

1) le solvant organique non polaire au sein duquel on fait réagir d'une part le composé aldéhydique (II) et le réactif déshydratant et d'autre part le composé de condensation et l'alcool (III) est choisi de préférence dans le groupe constitué par les hydrocarbures aromatiques, les hydrocarbures aliphatiques, les hydrocarbures aliphatiques halogénés et le cyclohexane.

2) Le solvant organique non polaire au sein duquel on fait réagir l'aniline et le composé (IV) est choisi, de préférence, dans le groupe constitué par les hydrocarbures aromatiques, les hydrocarbures aliphatiques, les hydrocarbures aliphatiques halogénés et le cyclohexane.

3) L'agent acide utilisé dans l'hydrolyse du 2,2-diméthyl 3-(phényliminométhyl) cyclopropane-1-carboxylate de (S) α-cyano 3-phénoxybenzyle est choisi de préférence dans le groupe constitué par l'acide sulfurique, l'acide chlorhydrique, l'acide phosphorique et l'acide paratoluène sulfonique et l'hydrolyse est effectuée avantageusement en présence d'un solvant organique miscible à l'eau.

Comme il est indiqué dans le brevet européen 0 030 887, les composés de l'invention peuvent être utilisés pour préparer sous toutes leurs formes stéréoisomères les composés de formule générale V

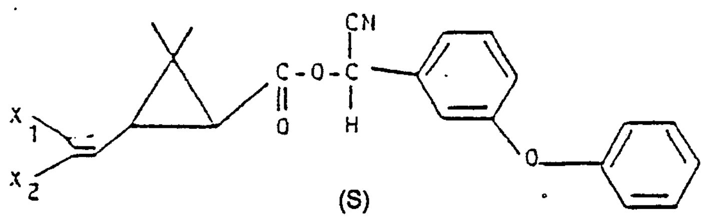

(S)

(V)

dans laquelle $X_1$ et $X_2$, identiques ou différents, représentent un radical alcoyle comportant de 1 à 4 atomes de carbone, un atome de fluor, de chlore ou de brome, ou représentent ensemble avec l'atome de carbone auquel ils sont liés, un homocycle carboné comportant de 3 à 7 atomes de carbone ou un hétérocycle de formule

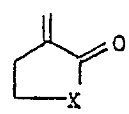

dans lequel X représente un atome d'oxygène ou de soufre, la copule acide des composés (V) pouvant être de structure cis ou trans, racémique ou optiquement active et la copule alcoolique étant de configuration (S) selon un procédé caractérisé en ce que l'on fait réagir le 2,2-diméthyl 3-formyl cyclopropane-1-carboxylate de (S) α-cyano 3-phénoxybenzyle, au sein d'un solvant organique (Y), avec un phosphorane de formule (VII)

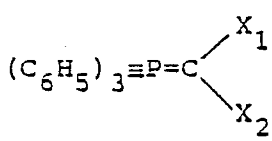

(VII)

résultant soit de l'action d'une base forte (B) sur un composé de formule (VIII)

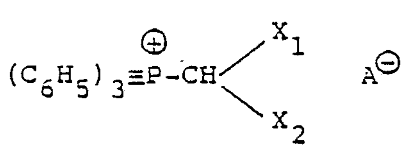

(VIII)

dans laquelle $A^{\ominus}$ représente un anion dérivé d'un acide minéral, soit lorsque $X_1$ et $X_2$ représentent un atome d'halogène, de l'action au sein d'un solvant (Y), d'une base forte (B) sur la triphényl phosphine et un haloforme convenable, pour obtenir le composé V désiré dont la copule d'acide a la même

configuration que celle du 2,2-diméthyl 3-formyl cyclopropane-1-carboxylate de (S) α-cyano 3-phénoxybenzyle de départ utilisé

— la base forte (B) utilisée est choisie de préférence dans le groupe constitué par les hydrures alcalins, les amidures alcalins, les alcoolates alcalins et le butyllithium ;

— le solvant (Y) est choisi avantageusement dans le groupe constitué par le diméthylformamide, le diméthylsulfoxyde, le tétrahydrofuranne, l'éther éthylique, l'éther monoéthylique du diéthylèneglycol et l'éther diéthylique du diéthylèneglycol.

Pour effectuer la réaction de Wittig qui permet de fixer la chaîne latérale en position 3 de l'ester (V) on prépare le phosphorane (VII) par action de la base (B) sur un sel de phosphonium ou sur un mélange de triphényl phosphine et d'haloforme, au sein du solvant polaire (Y). On fait ensuite réagir en présence d'un excès de base, l'ylure formé sur le 2,2-diméthyl 3-formyl cyclopropane-1-carboxylate de (S) α-cyano 3-phénoxybenzyle.

Pour réaliser cette réaction de Wittig, l'ordre d'introduction des réactifs peut être modifié. On peut, par exemple, introduire la base en dernier lieu et réaliser ainsi, simultanément, la formation du phosphorane et sa condensation avec le 2,2-diméthyl 3-formyl cyclopropane 1-carboxylate de (S) α-cyano 3-phénoxybenzyle.

En résumé, les produits de l'invention permettent de préparer les esters d'acide cyclopropane carboxylique d'alcool de configuration (S) de formule (V), esters pouvant posséder en position 3 des chaînes latérales variées et qui comme on le sait, sont doués d'un grand pouvoir insecticide.

La préparation du 2,2-diméthyl 3-formyl cyclopropane-1-carboxylate de (RS) α-cyano 3-phénoxybenzyle et du 2,2-diméthyl 3-formyl cyclopropane-1-carboxylate de (S) α-cyano 3-phénoxybenzyle au départ de l'acide 2,2-diméthyl 3-formyl cyclopropane-1-carboxylique sous forme trans ($II_1$) ou sous forme de lactone cis d'un acide 2,2-diméthyl 3-dihydroxyméthyl cyclopropane-1-carboxylique ($II_2$), et d'un alcool III, présente un caractère original. En effet, un essai d'estérification du composé aldéhydique (II) et de l'alcool (RS) α-cyano 3-phénoxybenzylique (III) conduit à une condensation de l'alcool sur la fonction aldéhyde et non sur la fonction acide. Le passage par l'intermédiaire de composé du type 2,2-diméthyl 3-formyl cyclopropane-1-carboxylate de (cyclohexylamino) (cyclohexylimino) méthyle permet une estérification normale avec l'alcool (RS) α-cyano 3-phénoxybenzylique pour conduire au composé (IV) désiré. La préparation de composé du type 2,2-diméthyl 3-formyl cyclopropane 1-carboxylate de (RS) α-cyano 3-phénoxybenzyle par les méthodes classiques nécessite l'ozonolyse d'un chrysanthémate de (RS) α-cyano 3-phénoxybenzyle, ce qui présente un caractère moins industriel que la méthode de la présente invention.

La synthèse des composés selon l'invention conduit, sans aucun risque d'échec au composé (V) désiré, quelque soit la chaîne latérale en position 3 que possède cet ester (V). En effet, le processus d'épimérisation s'effectue sur le composé comportant un groupement imine et donne à ce stade un rendement satisfaisant. La synthèse selon l'invention est donc exempte de tous aléas et permet, pratiquement à coup sûr, d'obtenir un composé (V) d'une stéréochimie déterminée et d'une structure déterminée pour la chaîne latérale en position 3. Ceci est très précieux pour cette catégorie de composés dont l'activité biologique varie considérablement avec la structure stérique.

Les exemples suivants illustrent l'invention sans toutefois la limiter.

Exemple 1 : 1R, cis 2,2-diméthyl 3-formyl cyclopropane-1-carboxylate de (cyclohexylamino) (cyclohexylimino) méthyle

Dans 400 $cm^3$ de chlorure de méthylène, on introduit 2 $cm^3$ de pyridine, 28,2 g de lactone de l'acide cis 2,2-diméthyl 3 S (dihydroxyméthyl) cyclopropane-1R-carboxylique, ajoute 41,2 g de dicyclohexyl carbodiimide, agite pendant 1 heure à 20 °C et obtient une solution de 1R, cis 2,2-diméthyl 3-formyl cyclopropane-1-carboxylate de (cyclohexylamino) (cyclohexylimino) méthyle.

Exemple 2 : 1R, cis 2,2-diméthyl 3-formyl cyclopropane-1-carboxylate de (RS) α-cyano 3-phénoxybenzyle

A la solution obtenue à l'exemple 1, on ajoute une solution de 28 g d'alcool (RS) α-cyano 3-phénoxy benzylique dans 150 $cm^3$ de chlorure de méthylène, agite pendant 16 heures à 20 °c, élimine, par filtration l'insoluble résiduel, lave la phase organique à l'eau, par une solution aqueuse 2N d'acide chlorhydrique, à l'eau sèche, concentre à sec par distillation sur pression réduite, ajoute de l'éther éthylique au résidu, filtre, concentre à sec et obtient 59,1 g de 1R, cis 2,2-diméthyl 3-formyl cyclopropane-1-carboxylate de (RS) α-cyano 3-phénoxy benzyle brut, utilisé tel quel pour l'exemple suivant.

Exemple 3 : 1R, cis 2,2-diméthyl 3-formyl cyclopropane-1-carboxylate de (S) α-cyano 3-phénoxybenzyle

Stade A : 1R, cis 2,2-diméthyl 3-(phényliminométhyl) cyclopropane-1-carboxylate de (RS) α-cyano 3-phénoxy benzyle.

Dans 400 $cm^3$ de benzène on introduit 59,1 g de produit obtenu à l'exemple 2, 12,5 $cm^3$ d'aniline, porte au reflux pendant 3 heures et demie en éliminant l'eau formée par azéotropie, concentre à sec et

obtient 77 g de 1R, cis 2,2-diméthyl 3-(phénylimino méthyl) cyclopropane-1-carboxylate de (RS) α-cyano 3-phénoxybenzyle brut utilisé tel quel pour le stade suivant.

Stade B : 1R, cis 2,2-diméthyl 3-(phénylimino méthyl) cyclopropane-1-carboxylate de (S) α-cyano 3-phénoxy benzyle.

Dans 300 $cm^3$ d'isopropanol et 5 $cm^3$ de triéthylamine on introduit les 77 g de 1R, cis 2,2-diméthyl 3-(phénylimmino méthyl) cyclopropane-1-carboxylate de (RS) α-cyano 3-phénoxy benzyle brut obtenu précédemment, amorce, agite pendant 60 heures à 20 °C, refroidit à 0 °C, isole par essorage les cristaux formés, sèche et obtient 17 g de 1R, cis 2,2-diméthyl 3-(phénylimino méthyl) cyclopropane-1-carboxylate de (S) α-cyano 3-phénoxy benzyle, F = 116 °C.

Stade C : 1R, cis 2,2-diméthyl 3-formyl cyclopropane-1-carboxylate de (S) α-cyano 3-phénoxy benzyle.

Dans 100 $cm^3$ de solution aqueuse 2N d'acide chlorhydrique on introduit 5 g de 1R, cis 2,2-diméthyl 3-(phénylimino méthyl) cyclopropane-1-carboxylate de (S) α-cyano 3-phénoxy benzyle, agite pendant 4 heures et 30 minutes à 20 °C, extrait au chlorure de méthylène, lave à l'eau, concentre à sec par distillation sous pression réduite, chromatographie le résidu sur gel de silice en éluant au benzène et obtient 3,8 g de 1R, cis 2,2-diméthyl 3-formyl cyclopropane-1-carboxylate de (S) α-cyano 3-phénoxy benzyle, F = 104 °C.

Spectre de RMN (deutéro chloroforme)
— pics à 1,25-1,43 p.p.m. attribués aux hydrogènes des méthyles géminés
— pics à 1,8-2,25 p.p.m. attribués aux hydrogènes en position 1 et 3 du cyclopropyle
— pic à 6,4 p.p.m. attribué à l'hydrogène porté par le même carbone que le CN
— pics à 6,91-7,6 p.p.m. atrtribués aux hydrogènes des noyaux aromatiques
— pics à 9,8-9,9 p.p.m. attribués à l'hydrogène du formyle.

Exemple 4 : 1R, trans 2,2-diméthyl 3-formyl cyclopropane-1-carboxylate de (cyclohexylamino) (cyclohexylimino) méthyle

Dans 300 $cm^3$ de chlorure de méthylène on introduit 2 $cm^3$ de pyridine, 28,4 g d'acide 1R, trans 2,2-diméthyl 3-formyl cyclopropane-1-carboxylique, ajoute 41,2 g de dicyclohexyl carbodiimide, agite pendant 1 heure à 20 °C et obtient une suspension de 1R, trans 2,2-diméthyl 3-formyl cyclopropane-1-carboxylate de (cyclohexylamino) (cyclohexylimino) méthyle.

Exemple 5 : 1R, trans 2,2-diméthyl 3-formyl cyclopropane-1-carboxylate de (RS) α-cyano 3-phénoxy benzyle

A la suspension obtenue à l'exemple 4 on ajoute 30 g d'alcool RS α-cyano 3-phénoxy benzylique, agite pendant 16 heures à 20 °C, élimine par filtration l'insoluble formé, concentre le filtrat à sec par distillation sous pression réduite, chromatographie le résidu du gel de silice en éluant par un mélange de benzène et d'acétate d'éthyle (95/5) et obtient 38 g de 1R, trans 2,2-diméthyl 3-formyl cyclopropane-1-carboxylate de (RS) α-cyano 3-phénoxy benzyle.

Spectre de RMN (deutéro chloroforme)
— pics à 1,27-1,29-1,30-1,36 p.p.m. attribués aux hydrogènes des méthyles géminés
— pics à 2,16-2,50 p.p.m. attribués aux hydrogènes en fonction 1 et 3 du cyclopropyle
— pic à 6,30 p.p.m. attribué à l'hydrogène porté par le même carbone que le groupement -CN
— pics à 6,83-7,60 p.p.m. attribués aux hydrogènes des noyaux aromatiques.

Exemple 6 : 1R, trans 2,2-diméthyl 3-formyl cyclopropane-1-carboxylate de (S) α-cyano 3-phénoxybenzyle

Stade A : 1R, trans 2,2-diméthyl 3-(phénylimino méthyl) cyclopropane-1-carboxylate de (RS) α-cyano 3-phénoxy benzyle

Dans 100 $cm^3$ d'éther de pétrole (eb 35-70 °C), on introduit 4 g d'aniline, 10 g de 1R, trans 2,2-diméthyl 3-formyl cyclopropane-1-carboxylate de (RS) α-cyano 3-phénoxy benzyle, obtenu au stade B précédent, porte le mélange réactionnel au reflux en éliminant, par azéotropie, l'eau formée, concentre à sec par distillation sous pression réduite et obtient 14,4 g de 1R, trans 2,2-diméthyl 3-(phénylimino méthyl) cyclopropane-1-carboxylate de (RS) α-cyano 3-phénoxy benzyle brut utilisé, tel quel pour le stade suivant.

Stade B : 1R, trans 2,2-diméthyl 3-(phénylimino méthyl) cyclopropane-1-carboxylate de (S) α-cyano 3-phénoxy benzyle

Dans 40 $cm^3$ d'isopropanol on introduit 1 $cm^3$ de triéthylamine, 14,4 g de 1R, trans 2,2-diméthyl 3-

(phénylimino méthyl) cyclopropane-1-carboxylate de (RS) α-cyano 3-phénoxy benzyle obtenus au stade précédent, amorce, agite à 20 °C pendant 96 heures, refroidit − 10 °C, isole, par essorage le précipité formé, le sèche et obtient 8,7 g de 1R, trans 2,2-diméthyl 3-(phénylimlinométhyl) cyclopropane-1-carboxylate de (S) α-cyano 3-phénoxy benzyle, F = 94 °C.

Spectre de RMN (deutéro chloroforme)

— pic à 1,32 p.p.m. attribué aux hydrogènes des méthyles géminés
— pics à 2,30-2,65 p.p.m. attribués aux hydrogènes en position 1 et 3 du cyclopropane
— pic à 6,40 p.p.m. attribué à l'hydrogène porté par le même carbone que le -CN
— pics à 7,66-7,76 p.p.m. attribués à l'hydrogène éthylénique.

Spectre IR (chloroforme)

— absorption à 1 740 $cm^{-1}$, attribuée au carbonyle de l'ester
— absorption à 1 640 $cm^{-1}$, attribuée au groupement -CN conjugué
— absorptions à 1 497 $cm^{-1}$ et 1 487 $cm^{-1}$ attibuées aux noyaux aromatiques
— absorption à 1 $382^{-1}$ attribuée aux méthyles géminés
— absorption à 692 $cm^{-1}$ attribuée au phényle.

Stade C : IR, trans 2,2-diméthyl 3-formyl cyclopropane-1-carboxylate de (S) α-cyano 3-phénoxy benzyle

Dans 100 $cm^3$ de solution aqueuse 2N d'acide chlorhydrique on introduit 5 g de 1R, trans 2,2-diméthyl 3-(phénylimino méthyl) cyclopropane-1-carboxylate de (S) α-cyano 3-phénoxy benzyle, agite pendant 2 heures et 30 minutes à 20 °C, isole par essorage, le précipité formé, le dissout dans le chlorure de méthylène, sèche la solution, la concentre à sec par distillation sous pression réduite et obtient 4,2 g de 1R, trans 2,2-diméthyl 3-formyl cyclopropane-1-carboxylate de (S) α-cyano 3-phénoxy benzyle, F = 70 °C.

Spectre de RMN (deutéro chloroforme)

— pics à 1,26-1,29 p.p.m. attribués aux hydrogènes des méthyles géminés
— pic à 2,53 p.p.m. attribué aux hydrogènes en position 1 et 3 du cyclopropane
— pic à 6,4 p.p.m. attribué à l'hydrogène porté par le même carbone que le groupement-CN
— pics à 6,90-7,50 p.p.m. attribués aux hydrogènes des noyaux aromatiques
— pics à 9,76-9,80 p.p.m. attribués à l'hydrogène du formyle.

Application 1 : 1R, cis 2,2-diméthyl 3-(2,2-dichlorovinyl) cyclopropane-1-carboxylate de (S) α-cyano 3-phénoxy benzyle

Dans 25 $cm^3$ d'heptane on introduit 3,93 g de triphényl phosphine broyée, 1,12 g de ter-butanol, 1,7 g de ter-butylate de potassium, refroidit à − 10 °C, ajoute 1,8 g de chloroforme, agite pendant 1 heure à + 10 °C, ajoute une solution de 3,49 g de 1R, cis 2,2-diméthyl 3-formyl cyclopropane-1-carboxylate de (S) α-cyano 3-phénoxy benzyle dans 20 $cm^3$ de tétrahydrofuranne, agite pendant 3 heures à + 10 °C, élimine par filtration l'insoluble formé, ajoute au filtrat 100 $cm^3$ d'une solution aqueuse saturée de phosphate monosodique, laisse reposer, décante, concentre la phase organique à sec par distillation sous pression réduite, chromatographie le résidu sur gel de silice en éluant avec un mélange de benzène et de cyclohexane (4/6), et obtient 3,4 g de 1R, cis 2,2-diméthyl 3-(2,2-dichlorovinyl) cyclopropane-1-carboxylate de (S) α-cyano 3-phénoxy benzyle, F = 60 °C.

Spectre de RMN (deutéro chloroforme)

— pics à 1,18-1,23 p.p.m. attribués aux hydrogènes des méthyles géminés
— pics à 1,8-1,93 p.p.m. et à 2,0-2,15-2,30 p.p.m. attribués aux hydrogènes en position 1 et 3 du cyclopropane
— pics à 6,10-6,20 p.p.m. attribués à l'hydrogène éthylénique
— pic à 6,33 p.p.m. attribué à l'hydrogène porté par le même carbone que le groupement CN
— pics à 6,83-7,50 p.p.m. attribués aux hydrogènes des noyaux aromatiques.

Application 2 : 1R, trans 2,2-diméthyl 3-(2,2-dichlorovinyl) cyclopropane-1-carboxylate de (S) α-cyano 3-phénoxy benzyle

Dans 25 $cm^3$ d'heptane on introduit 3,93 g de triphényl phosphine, 1,12 g de tert-butanol, 1,7 g de tert-butylate de potassium, ajoute à − 10 °C, 1,8 g de chloroforme, agite pendant 1 heure à + 15 °C, introduit à − 20 °C, une solution de 3,5 g de 1R, trans 2,2-diméthyl 3-formyl cyclopropane-1-carboxylate de (S) α-cyano 3-phénoxy benzyle dans 10 $cm^3$ de tétrahydrofuranne, agite pendant 2 heures et 30 minutes à − 10 °C, verse le mélange réactionnel sur une solution aqueuse de phosphate monosodique, extrait à l'éther éthylique, concentre à sec par distillation sous pression réduite et chromatographie le résidu sur gel de silice en éluant par le benzène.

On obtient 3,4 g de 1R, trans 2,2-diméthyl 3-(2,2-dichlorovinyl) cyclopropane-1-carboxylate de (S) α-cyano 3-phénoxy benzyle.

Spectre de RMN (deutéro chloroforme)

— pics à 1,18-1,24 p.p.m. attribués aux hydrogènes des méthyles géminés

— pics à 1,60-1,70 p.p.m. attribués à l'hydrogène en position 1 du cyclopropane
— pics à 2,20-2,29-2,30-2,40 p.p.m. attribués à l'hydrogène en position 3 du cyclopropane
— pics à 5,58-5,70 p.p.m. attribués à l'hydrogène éthylénique
— pic à 6,43 p.p.m. attribué à l'hydrogène porté par le même carbone que le groupement-CN
— pics à 6,9-7,60 p.p.m. attribués aux hydrogènes des noyaux aromatiques.

Application 3 : 1R, trans 2,2-diméthyl 3-/(E + Z) 2-chloro 2-bromo éthényl/cyclopropane-1-carboxylate de (S) α-cyano 3-phénoxy benzyle

Dans 130 $cm^3$ d'heptane on introduit 25 g de triphényl phosphine broyée, 9 g de tert butylate de potassium, 6 g de tert butanol, agite pendant 30 minutes à température ambiante, ajoute, à 0 °C, une solution de 17 g de chloro dibromo méthane dans 40 $cm^3$ d'heptane, agite pendant 45 minutes à 0° + 5°, introduit à 0 °C, une solution de 17,6 g de 1R, trans 2,2-diméthyl 3-formyl cyclopropane-1-carboxylate de (S) α-cyano 3-phénoxy benzyle dans 80 $cm^3$ de tétrahydrofuranne, agite pendant 30 minutes à + 5 °C, verse le mélange réactionnel sur une solution aqueuse N d'acide sulfurique, extrait à l'acétate d'éthyle, lave à l'eau, concentre à sec par distillation sous pression réduite, chromatographie le résidu sur gel de silice en éluant par un mélange de benzène et de cyclohexane (7/3), et obtient 16,5 g de 1R, trans 2,2-diméthyl 3-/(E + Z) 2-chloro 2-bromo éthényl/cyclopropane-1-carboxylate de (S) α-cyano 3-phénoxybenzyle/$\alpha/_D$ = + 31° (c = 0,6 %, benzène)

Spectre infrarouge (chloroforme)
— absorption à 1 738 $cm^{-1}$ attribuée au carbonyle de l'ester
— absorptions à 1 585, 1 485 $cm^{-1}$ attribuées aux noyaux aromatiques
— absorptions à 1 351, 1 381 $cm^{-1}$ attribuées aux méthyles géminés

Spectre de RMN (deutéro chloroforme)
— pics à 1,16-1,20 p.p.m. attribués aux hydrogènes des méthyles géminés
— pics à 1,62-1,70 p.p.m. attribués à l'hydrogène en position 1 du cyclopropane
— pics à 5,77-5,90-5,80-5,95 p.p.m. attribués à l'hydrogène éthylénique
— pic à 6,38 p.p.m. attribué à l'hydrogène porté par le même carbone que le groupement-CN
— pics à 6,91-7,50 p.p.m. attribués aux hydrogènes des noyaux aromatiques.

**Revendications**

1. A titre de produits chimiques nouveaux sous toutes leurs formes stéréoisomères, les produits dont les noms suivent : le 2,2-diméthyl 3-formyl cyclopropane-1-carboxylate de (cyclohexylamino) (cyclohexylimino) méthyle, le 2,2-diméthyl 3-formyl cyclopropane-1-carboxylate d'(isopropylamino) (isopropylimino) méthyle, le 2,2-diméthyl 3-formyl cyclopropane-1-carboxylate de (RS) α-cyano 3-phénoxybenzyle et le 2,2-diméthyl 3-formyl cyclopropane-1-carboxylate de (S) α-cyano 3-phénoxybenzyle.

2. Procédé de préparation des produits définis à la revendication 1, caractérisé en ce que l'on fait réagir un acide 2,2-diméthyl 3-formyl cyclopropane-1-carboxylique sous forme trans ($II_1$) ou sous forme de lactone cis d'un acide 2,2-diméthyl 3-dihydroxyméthyl cyclopropane-1-carboxylique ($II_2$)

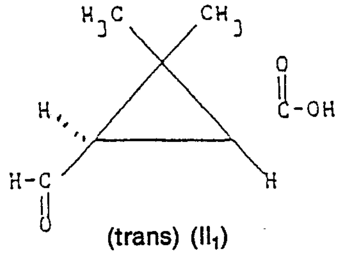

(trans) ($II_1$)

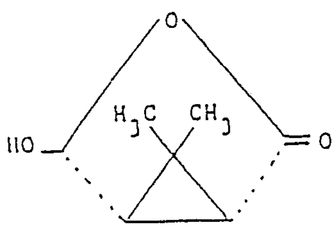

(cis) ($II_2$)

racémique ou optiquement actif, avec un réactif de déshydratation choisi dans le groupe constitué par le dicyclohexyl carbodiimide et le diisopropyl carbodiimide, en présente de pyridine ou de 4-diméthyl aminopyridine, et au sein d'un solvant organique non polaire, pour obtenir respectivement

i) le 2,2-diméthyl 3-formyl cyclopropane-1-carboxylate de (cyclohexylamino) (cyclohexylimino) méthyle

ii) ou le 2,2-diméthyl 3-formyl cyclopropane-1-carboxylate d'(isopropylamino) (isorpopylimino) méthyle dont les copules acides sont de structure trans ou cis, racémiques ou optiquement actives, soumet si désiré l'un de ces composés à l'action de l'alcool (RS) α-cyano 3-phénoxybenzylique (III)

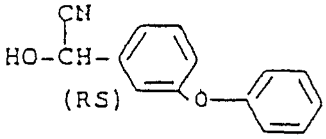

(III)

au sein d'un solvant non polaire pour obtenir

iii) le 2,2-diméthyl 3-formyl cyclopropane-1-carboxylate de (RS) α-cyano 3-phénoxybenzyle correspondant (IV)

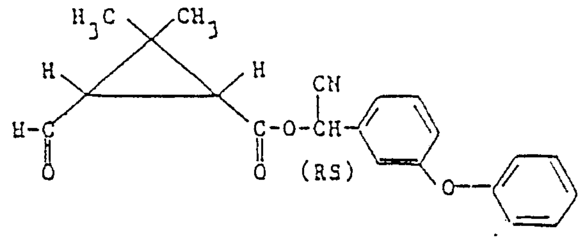

(IV)

de structure cis ou trans, racémique ou optiquement actif, soumet si désiré au sein d'un solvant organique non polaire, cet ester à l'action de l'aniline, pour obtenir le 2,2-diméthyl 3-(phényliminométhyl) cyclopropane-1-carboxylate de (RS) α-cyano 3-phénoxybenzyle, que l'on soumet à l'action de la triéthylamine au sein de l'isopropanol, au sein duquel l'ester d'alcool de configuration R est plus soluble que son diastéréoisomère, ce qui permet après épimérisation du carbone asymétrique de la copule alcoolique d'obtenir sous forme cristalline le 2,2-diméthyl 3-(phényliminométhyl) cyclopropane-1-carboxylate de (S) α-cyano 3-phénoxybenzyle que l'on soumet à une hydrolyse à l'aide d'un agent acide, pour obtenir

iiii) le 2,3-diméthyl 3-formyl cyclopropane-1-carboxylate de (S) α-cyano 3-phénoxybenzyle

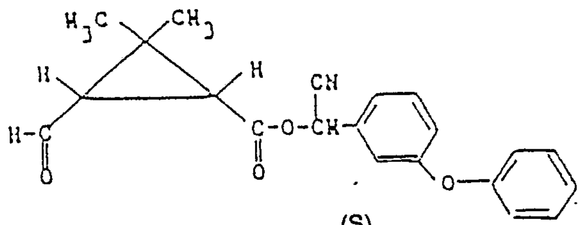

$(VI_A)$

(S)

3. Procédé selon la revendication 2, caractérisé en ce que le solvant organique non polaire au sein duquel on fait réagir d'une part le composé aldéhydique (II) et le réactif déshydratant et, d'autre part le composé de condensation et l'alcool III est choisi dans le groupe constitué par les hydrocarbures aromatiques, les hydrocarbures aliphatiques, les hydrocarbures aliphatiques halogénés et le cyclohexane.

4. Procédé selon l'une quelconque des revendications 2 et 3 caractérisé en ce que le solvant organique non polaire au sein duquel on fait réagir l'aniline et le composé (IV) est choisi dans le groupe constitué par les hydrocarbures aromatiques, les hydrocarbures aliphatiques, les hydrocarbures aliphatiques halogénés et le cyclohexane.

5. Procédé selon l'une quelconque des revendications 2 à 4 caractérisé en ce que l'agent acide utilisé dans l'hydrolyse du 2,2-diméthyl 3(phényliminométhyl) cyclopropane 1-carboxylate de (S) α-cyano 3-phénoxybenzyle est choisi dans le groupe constitué par l'acide sulfurique, l'acide chlorhydrique, l'acide phosphorique et l'acide paratoluène sulfonique.

6. Procédé selon l'une quelconque des revendications 2 à 5 caractérisé en ce que l'hydrolyse du 2,2-diméthyl 3(phénylimino-méthyl) cyclopropane 1-carboxylate de (S) α-cyano 3-phénoxy-benzyle est effectuée en présence d'un solvant organique miscible à l'eau.

**Claims**

1. As new chemical products in all their stereoisomeric forms, the products, the names of which follow : 2,2-dimethyl 3-formyl cyclopropane-1-carboxylate of (cyclohexylamino) (cyclohexylimino) methyl, 2,2-dimethyl-3-formyl cyclopropane-1-carboxylate of (isopropylamino) (isopropylimino) methyl, 2,2-dimethyl 3-formyl cyclopropane-1-carboxylate of (RS) α-cyano-3-phenoxybenzyl and 2,2-dimethyl 3-formyl cyclopropane-1-carboxylate of (S) α-cyano 3-phenoxybenzyl.

2. Preparation process for products defined in Claim 1, characterized in that 2,2-dimethyl 3-formyl cyclopropane-1-carboxylic acid in the trans form $(II_1)$ or in the form of cis lactone of 2,2-dimethyl 3-dihydroxymethyl cyclopropane-1-carboxylic acid $(II_2)$,

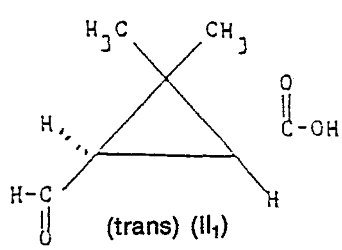

(trans) $(II_1)$

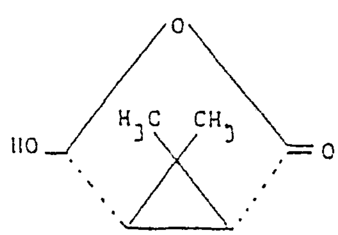

(cis) $(II_2)$

racemic or optically active, is made to react with a dehydration reagent chosen from the group composed of dicyclohexyl carbodiimide and diisopropyl carbodiimide, in the presence of pyridine or 4-dimethyl aminopyridine, and in a non-polar organic solvent, in order to obtain respectively

i) 2,2-dimethyl-3-formyl cyclopropane-1-carboxylate of (cyclohexylamino) (cyclohexylimino) methyl

ii) or 2,2-dimethyl-3-formyl cyclopropane-1-carboxylate of (isopropylamino) (isopropylimino) methyl, the acid copulas of which are of trans or cis structure, racemic or optically active, and if desired one of these compounds is submitted to the action of (RS) α-cyano 3-phenoxybenzyl alcohol (III)

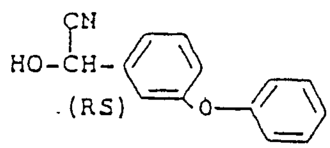

(III)

in a non-polar solvent so as to obtain

iii) the corresponding 2,2-dimethyl-3-formyl cyclopropane-1-carboxylate of (RS) α-cyano-3-phenoxybenzyl (IV)

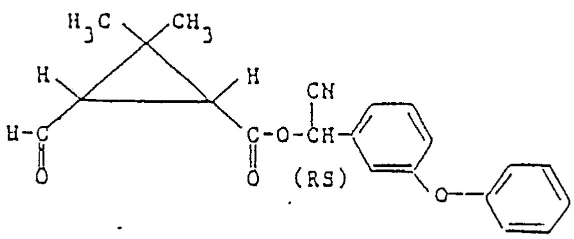

(IV)

of cis or trans structure, racemic or optically active, which ester is submitted if desired in a non-polar organic solvent to the action of aniline, so as to obtain 2,2-dimethyl-3-(phenyliminomethyl) cyclopropane-1-carboxylate of (RS) α-cyano 3-phenoxybenzyl, which is submitted to the action of triethylamine in isopropanol, in which the alcohol ester with the configuration R is more soluble that its diastereoisomer, which enables, after epimerisation of the asymmetric carbon of the alcohol copula to obtain in the crystalline form 2,2-dimethyl-3-(phenyliminomethyl) cyclopropane-1-carboxylate of (S) α-cyano-3-phenoxybenzyl which is submitted to hydrolysis by means of an acid agent, so as to obtain

iiii) 2,3-dimethyl-3-formyl cyclopropane-1-carboxylate of (S) α-cyano 3-phenoxybenzyl

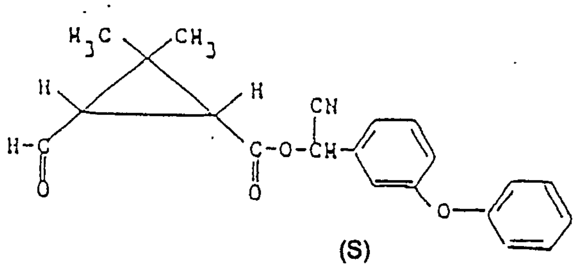

($VI_A$)

(S)

3. Process according to Claim 2, characterized in that the non-polar solvent in which on the one hand the aldehyde compound (II) and the dehydrating reagent, and on the other hand the condensation compound and the alcohol III are made to react, is chosen from the group composed of aromatic hydrocarbons, aliphatic hydrocarbons, halogenized aliphatic hydrocarbons and cyclohexane.

4. Process according to either of the Claims 2 or 3 characterized in that the non-polar organic solvent in which the aniline and the compound with the formula (IV) are made to react is chosen from the group composed of aromatic hydrocarbons, aliphatic hydrocarbons, halogenized aliphatic hydrocarbons and cylohexane.

5. Process according to any one of the claims 2 to 4 characterized in that the acid agent used in the hydrolysis of 2,2-dimethyl-3-(phenyliminomethyl) cyclopropane 1-carboxylate of (S) α-cyano-3-phenoxybenzyl is chosen from the group composed of sulphuric acid, hydrochloric acid, phosphoric acid and paratoluene sulphonic acid.

6. Process according to any one of the claims 2 to 5 characterized in that the hydrolysis of 2,2-dimethyl-3-(phenyliminomethyl) cyclopropane-1-carboxylate of (S) α-cyano-3-phenoxybenzyl is carried out in the presence of an organic solvent miscible with water.

**Patentansprüche**

1. Als neue chemische Produkte in sämtlichen ihrer stereoisomeren Formen die Produkte mit den

folgenden Bezeichnungen : (Cyclohexylamino)-(cyclohexylimino)-methyl-2,2-dimethyl-3-formyl-cyclopropan-1-carboxylat, (Isopropylamino)-(isopropylimino)-methyl-2,2-dimethyl-3-formyl-cyclopropan-1-carboxylat (RS)-α-Cyano-3-phenoxybenzyl-2,2-dimethyl-3-formyl-cyclopropan-1-carboxylat und (S)-α-Cyano-3-phenoxybenzyl-2,2-dimethyl-3-formyl-cyclopropan-1-carboxylat.

2. Verfahren zur Herstellung der Produkte gemäß Anspruch 1, dadurch gekennzeichnet, daß man eine 2,2-Dimethyl-3-formyl-cyclopropan-1-carbonsäure in trans-Form ($II_1$) oder in Form des cis-Lactons einer 2,2-Dimethyl-3-dihydroxymethyl-cyclopropan-1-carbonsäure ($II_2$)

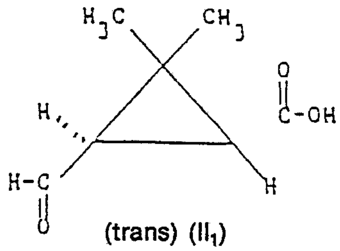

(trans) ($II_1$)

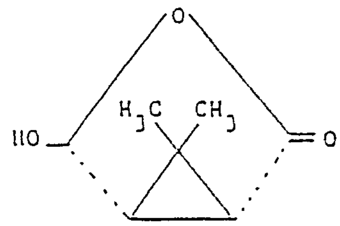

(cis) ($II_2$)

in racemischer oder optisch aktiver Form mit einem Dehydratationsreagens, ausgewählt unter Dicyclohexyl-carbodiimid und Diisopropylcarbodiimid, in Gegenwart von Pyridin oder 4-Dimethylaminopyridin und in dem Medium eines nicht-polaren, organischen Lösungsmittels umsetzt, um

i) das (Cyclohexylamino)-(cyclohexylimino)-methyl-2,2-dimethyl-3-formyl-cyclopropan-1-carboxylat oder

ii) das (Isopropylamino)-(isopropylimino)-methyl-2,2-dimethyl-3-formyl-cyclopropan-1-carboxylat zu erhalten, deren saure Verknüpfungskomponenten die transoder cis-Struktur in racemischer oder optisch aktiver Form aufweisen, gewünschtenfalls eine dieser Verbindungen der Einwirkung von (RS)-α-Cyano-3-phenoxybenzylalkohol (III)

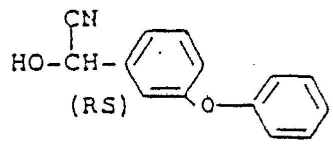

(III)

in dem Medium eines nicht-polaren Lösungsmittels unterzieht, um

iii) das entsprechende (RS)-α-Cyano-3-phenoxy-benzyl-2,2-dimethyl-3-formyl-cyclopropan-1-carboxylat (IV)

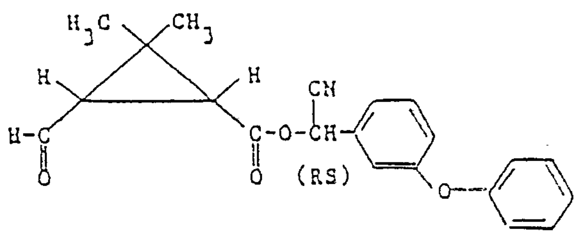

(IV)

mit cis- oder trans-Struktur in racemischer oder optisch aktiver Form zu erhalten, gewünschtenfalls in dem Medium eines organischen, nicht-polaren Lösungsmittels diesen Ester der Einwirkung von Anilin unterzieht, um das (RS)-α-Cyano-3-phenoxybenzyl-2,2-dimethyl-3-(phenyliminomethyl)-cyclopropan-1-carboxylat zu erhalten, das man der Einwirkung von Triethylamin in dem Medium von Isopropanol unterzieht, in dessen Medium der Ester des Alkohols mit R-Konfiguration stärker löslich ist als sein Diastereomeres, wodurch es möglich ist, nach der Epimerisation des asymmetrischen Kohlenstoffatoms der alkoholischen Verknüpfungskomponente in kristalliner Form das (S)-α-Cyano-3-phenoxybenzyl-2,2-dimethyl-3-(phenyliminomethyl)-cyclopropan-1-carboxylat zu erhalten, das man einer Hydrolyse mit einem sauren Mittel unterzieht, um

iiii) das (S)-α-Cyano-3-phenoxybenzyl-2,2-dimethyl-3-formyl-cyclopropan-1-carboxylat

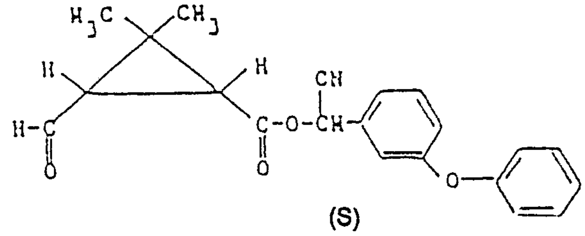

($VI_A$)

(S)

zu erhalten.

3. Verfahren gemäß Anspruch 2, dadurch gekennzeichnet, daß das nicht-polare, organische Lösungsmittel, in dessen Medium man einesteils die Aldehydverbindung (II) und das Dehydratationsreagens und anderenteils die Verbindung der Kondensation und den Alkohol (III) umsetzt, unter den aromatischen Kohlenwasserstoffen, den aliphatischen Kohlenwasserstoffen, den halogenierten, aliphatischen Kohlenwasserstoffen und Cyclohexan ausgewählt wird.

4. Verfahren gemäß einem der Ansprüche 2 und 3, dadurch gekennzeichnet, daß das nicht-polare, organische Lösungsmittel, in dessen Medium man Anilin und die Verbindung (IV) umsetzt, unter den aromatischen Kohlenwasserstoffen, den aliphatischen Kohlenwasserstoffen, den halogenierten, aliphatischen Kohlenwasserstoffen und Cyclohexan ausgewählt wird.

5. Verfahren gemäß einem der Ansprüche 2 bis 4, dadurch gekenzeichnet, daß das bei der Hydrolyse von (S)-α-Cyano-3-phenoxybenzyl-2,2-dimethyl-3-(phenyliminomethyl)-cyclopropan-1-carboxylat verwendete, saure Mittel unter Schwefelsäure, Chlorwasserstoffsäure, Phosphorsäure und p-Toluolsulfonsäure ausgewählt wird.

6. Verfahren gemäß einem der Ansprüche 2 bis 5, dadurch gekennzeichnet, daß die Hydrolyse des (S)-α-Cyano-3-phenoxybenzyl-2,2-dimethyl-3-(phenyliminomethyl)-cyclopropan-1-carboxylats in Gegenwart eines mit Wasser mischbaren, organischen Lösungsmittels durchgeführt wird.